# EUROPEAN PATENT APPLICATION

(11) **EP 1 069 791 A1**
(43) Date of publication of application: **17.01.2001**
(21) Application number: 99113492.5
(22) Date of filing: 13.07.1999
(51) Int. Cl.: H04Q 7/22

(54) **A method for managing missed calls in phone system**

(71) Applicant: ROBERT BOSCH GMBH, 70442 Stuttgart (DE)
(72) Inventor: Laure Richard, 9000 Aalberg (DK)

(57) **Abstract**

The present invention provides a method for managing missed calls in phone systems, particularly digital mobile phone systems, comprising the steps of storing specific information about each missed call in a missed calls stack. Said specific information comprises at least an indication of the caller and the number of times said caller has called.

## Description

### BACKGROUND OF THE INVENTION

The present invention relates to a method for managing missed calls in phone systems, particularly digital mobile phone systems.

Although applicable to any phone system, the present invention and its underlying problems will be discussed with particular reference to GSM mobile phone systems.

In general, missed calls are available when the phone is turned on or in a range covered by the selected base station (GSM world). If none of these conditions are met, the caller may be enabled to leave a message. When the phone is turned on thereafter, the fact that a message was left may be displayed or communicated by a call.

The feature that the number of times a call was missed is made available, is very useful for mobile phones which are often turned off or in a range not covered by the selected base station. Until now, mobile handsets only inform the user about the total number of missed calls, f.e. by displaying a message "x calls during absence". Thus, the only information available is how many missed calls the handset received in the meantime.

A disadvantage of this method is that the user may desire to obtain more detailled information about the background and the urgency of such missed calls, particularly, if no mailbox is available or if the caller has not used the mailbox. Also it may be impossible to use any mailbox, if the user just doesn't answer the call.

### SUMMARY OF THE INVENTION

The present invention provides a method for managing missed calls in phone systems, particularly digital mobile phone systems as defined in claim 1.

A particular advantage of the invention is that the user is aware of the number of times a person has tried to call during his absence. Thus, he is given an idea of the urgency of the call. Until now the only information he got was how many missed calls he has in total. But as he got a list of only three numbers, it was impossible for him to determine which one may be the most urgent one.

The principal idea underlying the present invention is that when a call is received by the handset and the user doesn't answer the call, the information about the call is placed in a list called the missed calls stack. An icon is displayed on the screen of the handset indicating the existence of missed calls. The user may have 10 missed calls but only three numbers listed missed calls stack. This comes from the fact that each number may have called several times. To help the user in distinguishing the importance of calling a certain number back, the user can be informed about the number of times a certain number has called which is stored in the missed calls stack in association with said certain number.

Preferred embodiments of the present invention are listed in the dependent claims.

According to a preferred embodiment, said indication is the identified number of the caller, if available, and if no indication of the caller can be obtained, the systems creates an indication to be stored in the missed calls stack. Thus, all unidentified callers may be grouped under the indication "unknown number".

According to a further preferred embodiment, the system comprises a display means, wherein items of said missed calls stack is displayed as a list on said display means on demand.

According to a further preferred embodiment, said list is ordered according to the number of times each caller has called. Thus, the user can immediately recognize the most urgent missed call.

According to a further preferred embodiment, said list is ordered according to the time, the last call was received. Especially when the list is stored on the SIM card, there the calls are listed in the order they are received.

According to a further preferred embodiment, said specific information comprises the date and/or time the last call was received for this indication.

According to a further preferred embodiment, a name stored in an internal phone book of the system is associated with the number, if available, and said name is stored in the missed calls stack.

### BRIEF DESCRIPTION OF THE DRAWINGS

The present invention will become more fully understood by the following detailed description of preferred embodiments thereof in conjunction with the accompaying drawings, in which:
- Fig. 1: shows an example of a display list of missed calls; and
- Fig. 2: shows an example of an expanded display list of Fig. 1.

### DESCRIPTION OF THE PREFERRED EMBODIMENTS

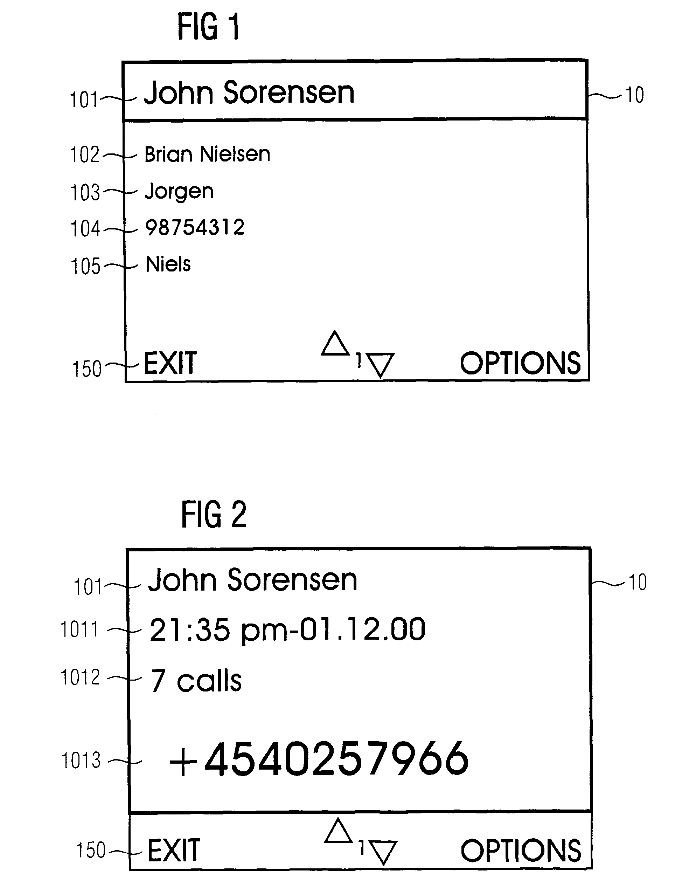

Fig. 1 shows an example of a display list of missed calls in a system display 10 of a mobile phone, wherein 101 - 105 are entries and 150 denotes a command line.

It is assumed that the user had put aside his mobile for some time and now desires to get some information about the missed calls during his absence.

In the main display menu which is not shown here, he discovers an ikon telling him "10 missed calls during absence". Thus, the user enters the missed calls menu shown in Fig. 1, f.e. by selecting the ikon by means of the cursor.

During his absence, the system has stored specific information about each missed call in the missed calls stack, f.e. a usual random access memory or on the SIM card or similar.

In this example, said specific information comprises an indication of the caller, the number of times said caller has called, and the date and/or time the last call was received for this indication.

Said indication is obtained by the identified number of the caller, if available, and if no indication of the caller can be obtained, the systems creates an indication "unknown number" to be stored in the missed calls stack.

Moreover instead of said identified number, a name stored in an internal phone book of the system is stored in the missed calls stack, if such a name can be associated with said number.

In the missed calls menu, items of said missed calls stack is displayed as a list having entries said 101 - 105 on said display means. In Fig. 1, said list is ordered according to the number of times each caller has called.

In the missed calls stack, missed calls are listed with a number or a name as explained above. Thus, if a name couldn't be associated to a number, the number is displayed which is the case for entry 104 "98754312".

When the user enters the list of missed calls, all numbers or names are listed in order of the number of missed calls. Here, John Sorensen 101 has called most times, and entry Niels 105 least times.

In this menu level, the names or numbers are shown without any difference between them, except the fact that the entry currently selected by the cursor is highlighted, here entry 101.

If the cursor stays longer than two seconds on a specific entry line, this entry line expands and details about the corresponding call are displayed (see Figure 2) with among them the stored number of times the number called.

Fig. 2 shows an example of an expanded display list of Fig. 1.

On the expanded view of the missed call information shown in Fig. 2, the name (if one is available), the date and time the last call was received for this name or number, the number of times the number called and the exact number are displayed as additional lines 1011, 1012, 1013.

Thus, the user sees that John Sorensen 101 has tried 7 times to reach him, and the last time was on 1.12.00 at 21.35 p.m. In order to call back, the user would have to select line 1013 with the cursor, only.

Although the present invention has been described with respect to preferred embodiments thereof, it should be understood that many modifications can be performed without departing from the scope of the invention as defined by the appended claims.

Particularly, the kind and amount of information stored in the missed calls stack is not limited to the shown example.

Moreover, the invention is applicable to stationary phones as well. Also, the arrangement and levels of the missed calls display may be altered in many ways.

## Claims

1. A method for managing missed calls in phone systems, particularly digital mobile phone systems, comprising the steps of:
storing specific information about each missed call in a missed calls stack;
wherein said specific information comprises at least an indication of the caller and the number of times said caller has called.

2. The method according to claim 1, wherein said indication is the identified number of the caller, if available, and if no indication of the caller can be obtained, the systems creates an indication to be stored in the missed calls stack.

3. The method according to claim 1 or 2, wherein the system comprises a display means, wherein items of said missed calls stack is displayed as a list on said display means on demand.

4. The method according to claim 1, wherein said list is ordered according to the number of times each caller has called.

5. The method according to claim 1, wherein said list is ordered according to the time, the last call was received, preferably after having been stored on the SIM card.

6. The method according to one of the preceeding claims, wherein said specific information comprises the date and/or time the last call was received for this indication.

7. The method according to one of the preceeding claims 2 to 2, wherein a name stored in an internal phone book of the system is associated with the number, if available, and said name is stored in the missed calls stack.
